# EUROPEAN PATENT APPLICATION

(11) **EP 2 482 115 A1**
(43) Date of publication of application: **01.08.2012**
(21) Application number: 09849698.7
(22) Date of filing: 15.12.2009
(51) Int. Cl.: G02B 27/02

(54) **PORTABLE OBSERVER**

(30) Priority: 25.09.2009 CN 200920246011 U; 25.09.2009 CN 200920246010 U; 25.09.2009 CN 200920246009 U; 25.09.2009 CN 200920246008 U; 25.09.2009 CN 200920246012 U
(71) Applicant: Aigo Digital Technology Co., Ltd, Beijing 100080 (CN); Lin, William, Beijing 100080 (CN)
(72) Inventor: LIN, William, Beijing 100080 (CN)
(74) Representative: Meissner, Bolte & Partner
(86) International application number: PCT/CN2009/075593
(87) International publication number: WO 2011/035512

(57) **Abstract**

A portable observer (100) comprises a main body (1), a processing module (6) provided inside the main body, and a display screen (3) and a camera (2) provided on the main body. The display screen and the camera are connected with the processing module. Image information obtained by the camera is displayed by the display screen after the image information being processed by the processing module. The portable observer also comprises a connection pipe (21) connecting the camera with the main body. The connection pipe may extend from or retract to the inside of the main body so as to increase the whole length of the camera. Especially, the connection pipe is flexible. The camera may conveniently extend into the slit so as to display the information in the slit to the display screen. The portable observer is easy to use, in particular during searching an object, and can easily find the object.

## Description

### Field of the Invention

The present invention relates to an observation device, and particularly, to a portable observer that can be easily used.

### Background of the Invention

During daily life, in case an article accidentally falls under the bed, the cabinet, or into a slit, its detailed position cannot be observed as the light and space are very limited, and people can only blindly search in the slit, moreover, the article is not necessarily found after a long time blindly searching, which causes great inconveniences to people's life. Usually, people use a flashlight to illuminate the slit and observe the detailed position of the article. However, the position of the slit is generally unreachable by human eyes, or requires a person to make a certain action, such as getting down or tiptoeing.

### Summary of the Invention

The technical problem to be solved by the present invention is to provide a portable observer that can be easily used, so as to increase the length of the camera by setting a flexible connection pipe, thereby easily extending the camera into a place unobservable to human eyes and displaying the conditions of the place with a display screen.

The present invention adopts the following technical solution to solve the above technical problem: a portable observer, comprises: a main body, a processing module provided inside the main body, and a display screen and a camera provided on the main body, the display screen and the camera are connected with the processing module, image information obtained by the camera is displayed by the display screen after the image information being processed by the processing module, wherein the portable observer further comprises a connection pipe connecting the camera with the main body, and the connection pipe can extend from or retract to the inside of the main body.

The portable observer further comprises a slide section provided at one end of the connection pipe, the slide section fitting a slide rail provided inside the main body and being slidable on the slide rail to make the connection pipe extend from or retract to the inside of the main body.

The slide rail and the main body are set separately.

The inside of the main body is provided with at least one pair of first longitudinal walls and at least one pair of second longitudinal walls located between the first longitudinal walls, the slide rail is fixed to the first longitudinal walls, and the slide section is between the slide rail and the second longitudinal walls.

The slide rail comprises a first horizontal section, a second horizontal section, and a vertical section connecting the first horizontal section with the second horizontal section, wherein the slide section comprises an riding section between the first horizontal section of the slide rail and the second longitudinal walls of the main body, and a fixing end for fixing the connection pipe, and wherein the upper and lower surfaces of the riding section are both set cambered and contacted with the first horizontal section of the slide rail and the second longitudinal walls of the main body, respectively.

The display screen and the camera are provided on two opposite sides of the main body, respectively, and the connection pipe can extend from or retract to the inside of the main body along the horizontal direction by operating the camera to increase the whole length of the camera.

An insulating strip is provided inside the main body, and a cable connecting the camera with the processing module is provided in the connection pipe, wherein the cable attaches to the insulating strip after passing the connection pipe, and then connects the processing module.

The connection pipe is made of flexible material, and the user can change the direction of the camera by rotating or bending the connection pipe upon demand.

The camera comprises a housing, an electronic circuit system, an illumination lamp and a lens connected to the electronic circuit system.

The illumination lamp may be one or more and provided inside the housing.

The main body is provided with a switch for turning on or off the illumination lamp.

The camera comprises a housing, a positioning section fixed inside the housing and an axis section fitting the positioning section, wherein the positioning section is rotatable around the axis section.

The positioning section has a rotation range of 0 to 90 degrees, and makes the camera to rotate from the horizontal state to the vertical state, or from the vertical state to the horizontal state.

A cambered space is formed inside the positioning section, and the axis section protrudes outward in correspondence with the cambered space.

The main body is provided with a receiving slot for receiving the camera, and the front side and one lateral side of the receiving slot are set open.

The main body is provided with a pair of infrared lamps located at both sides of the camera.

The portable observer further comprises an audio codec module connected to the processing module, an audio input module connected to the audio codec module, and a storage module connected to the processing module.

The connection pipe is a leather hose or a plica pipe.

The portable observer of the present invention has the following advantages:
When using the portable observer of the present invention, the user can pull the camera out of the inside of the main body upon demand, so as to extend the whole length of the camera. In addition, since the connection pipe of the camera is a flexible plica pipe, the user can extend the camera into the slit, especially a bent slit, and the direction of the camera can be adjusted by bending the connection pipe, so as to expand the visual field. In addition, the camera can be rotated from the horizontal state to the vertical state, and the usage is flexible and convenient. Further, after the camera is rotated from the horizontal state to the vertical state, the object is visible even at night through the infrared lamps at both sides of the camera. In case in places where the light is insufficient, e.g., a slit, the human eyes cannot observe the conditions in the slit, the target area can be illuminated by turning on the illumination lamps on the camera, and the conditions of the target area can be easily observed through the display screen, which is in particular convenient and reliable during searching an object.

### Brief Description of the Drawings

Fig. 1 is a schematic view of a portable observer of the present invention;
Fig. 2 is a front view of the portable observer of the present invention;
Fig. 3 is a schematic view of a back portion of the portable observer of the present invention after the back portion being sliced off;
Fig. 4 is a cross-section view along Line A-A in Fig. 3;
Fig. 5 is a schematic view of a camera of the portable observer of the present invention;
Fig. 6 is a cross-section view along Line B-B in Fig. 1;
Fig. 7 is a schematic view of the camera of the present invention pulled out of the inside of the main body;
Fig. 8 is a schematic view of the camera of the present invention rotated from the horizontal state to the vertical state;
Fig. 9 is a schematic view of the camera of the portable observer of the present invention rotated from the horizontal state to the vertical state; and
Fig. 10 is a structure block diagram of an internal circuit of the portable observer of the present invention.

### Detailed Description of the Preferred Embodiments

In order to further elaborate the technical means adopted by the present invention to achieve the intended object and the corresponding effects, the specific embodiments, structural features and effects of the portable observer of the present invention are detailedly described as follows in conjunction with the drawings and examples.

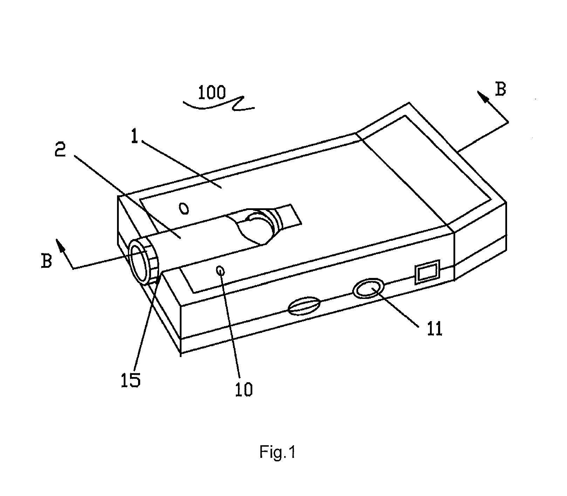

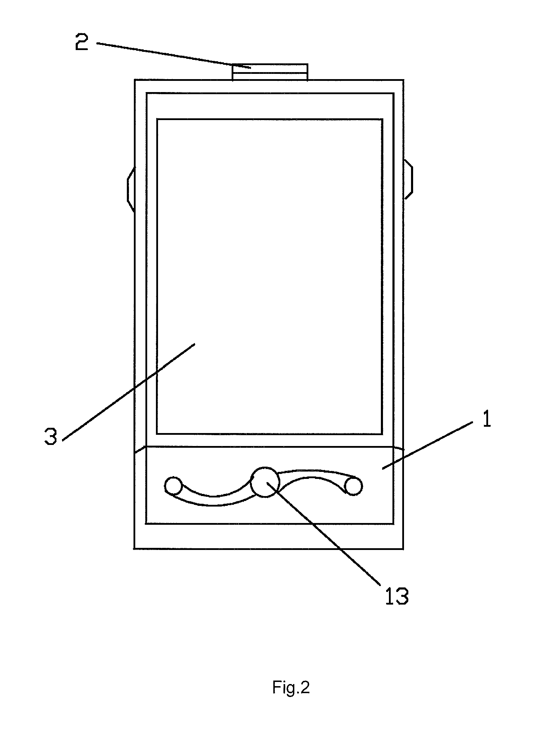

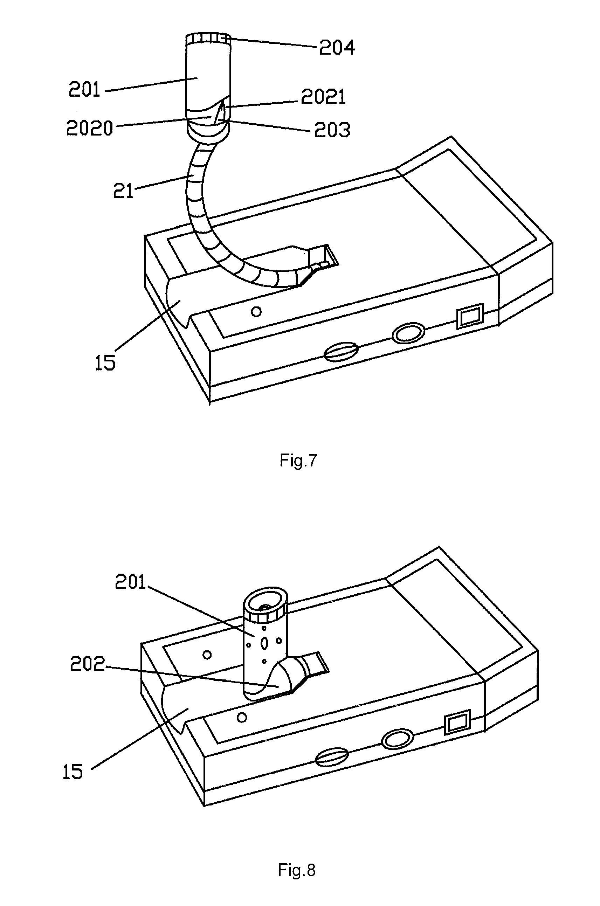

As shown in Fig. 1, which is a stereo view of a portable observer 100 of the present invention, the portable observer 100 comprises a main body 1, a display screen 3 (see Fig. 2) provided on the main body, a retractable camera 2 provided on the main body 1, and a power supply provided inside the main body 1 (not shown). The main body 1 comprises a front side, a back side opposite to the front side, top and bottom sides, and left and right sides. The display screen 3 is provided on the front side of the main body 1, and the camera 2 is provided on the back side of the main body 1. The left and right sides of the main body 1 are respectively provided with several control keys 11 for controlling the work state of the portable observer, such as on-off keys and brightness adjustment keys of illuminating lamps. The back side of the main body 1 is provided with a receiving slot 15 for receiving the camera 2 and infrared lamps 10 located at both sides of the receiving slot 15. The front side and one lateral side of the receiving slot are set open, so that the user can pull the camera 2 out of the inside of the receiving slot 15 upon demand (see Fig. 7), or rotates the camera 2 from the horizontal state to the vertical state (see Fig. 8). Under the vertical state, the infrared lamps 10 can illuminate areas at night.

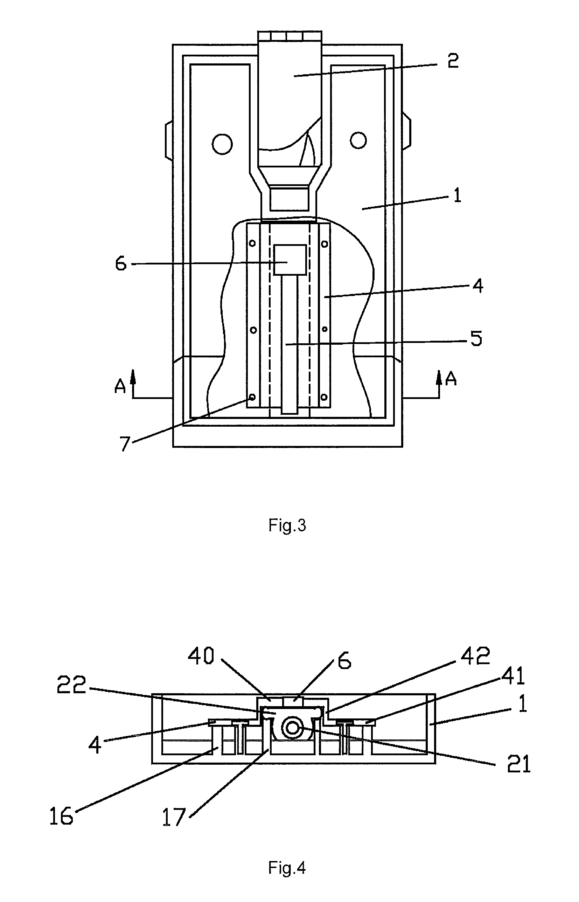

As shown in Figs. 3 and 4, wherein Fig. 3 is a cross-section view of a back portion of the portable observer and Fig. 4 is a cross-section view along Line A-A in Fig. 3, the inside of the main body 1 is provided with two pairs of first longitudinal walls 16 and one pair of second longitudinal walls 17. The first longitudinal walls 16 are located outside the second longitudinal walls 17. A slide rail 4 is fixed on the first longitudinal walls 16, including a first horizontal section 40, a second horizontal section 41 and a vertical section 42 connecting the first horizontal section 40 with the second horizontal section 41, wherein the second horizontal section 41 is fixed to the first longitudinal wall 16 through fixing means such as a screw, and by this way the slide rail 4 is fixed to the main body 1. There is a certain vertical distance between the first horizontal section 40 of the slide rail 4 and the top of the second longitudinal walls 17.

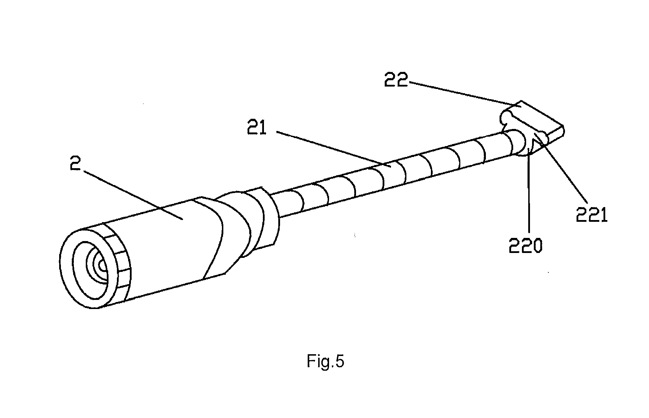

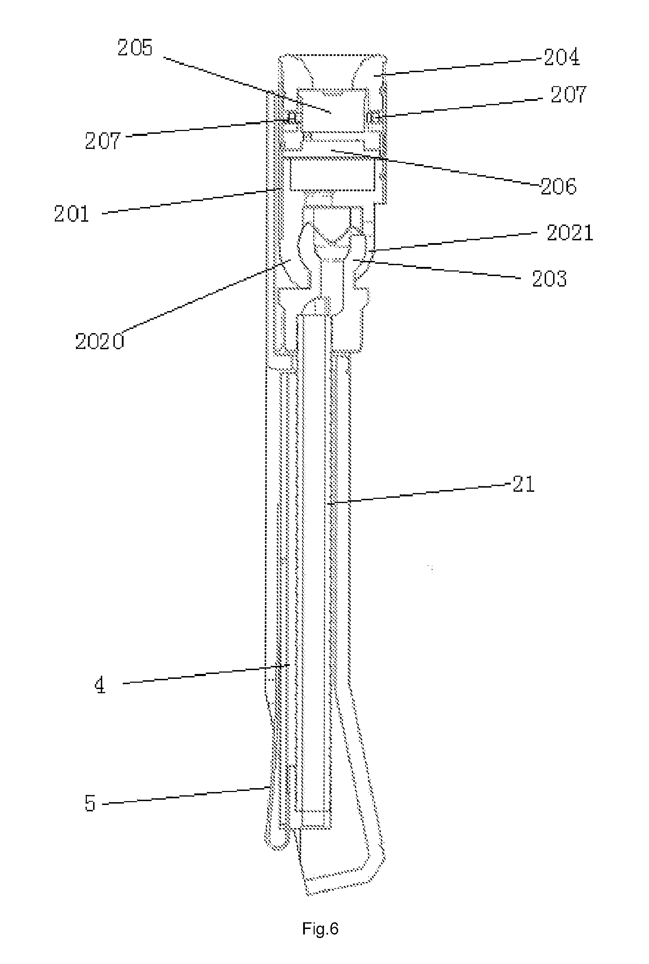

As shown in Figs. 5 and 6, the portable observer of the present invention further comprises a slide section 22, and a connection pipe 21 connecting the camera 2 with the slide section 22, wherein the camera is just located in the receiving slot 15 of the main body 1 (see Fig. 1 ). The slide section 22 comprises an riding section 221 located between the first horizontal section 40 of the slide rail 4 and the second longitudinal walls 17 of the main body 1, and a fixing end 220 for fixing the connection pipe. The upper and lower surfaces of the riding section 221 are both set cambered and contacted with the first horizontal section 40 of the slide rail 4 and the second longitudinal walls 17 of the main body 1, respectively. The cambered surface design of the riding section 221 can reduce the friction force between the three components, and it is very flexible and labor-saving for the user to pull the camera 2 outward. When the user pulls the camera 2 outward, the slide section 22 moves on the slide rail 4 so that the connection pipe 21 extends from the inside of the main body 1, thereby extending the whole length of the camera 2. The connection pipe 21 is made of flexible material, and for example may be a plica pipe, so the user may bend or elongate the connection pipe 21 upon demand. The inside of the connection pipe 21 is provided with a cable for connecting an electronic circuit system 206 (see Fig. 6) in the camera 2 with a processing module 6 (see Fig. 3) inside the main body 1. The cable extends from the inside of the connection pipe 21, attaches to a flexible insulating strip 5 (see Fig. 3) after extending from the inside of the connection pipe 21, and then connects the processing module 6. As a result, when the user pulls the camera 2 outward, the pulling force is transferred to the insulating strip 5, so as to prevent the cable from being broken or damaged when pulled by overlarge force.

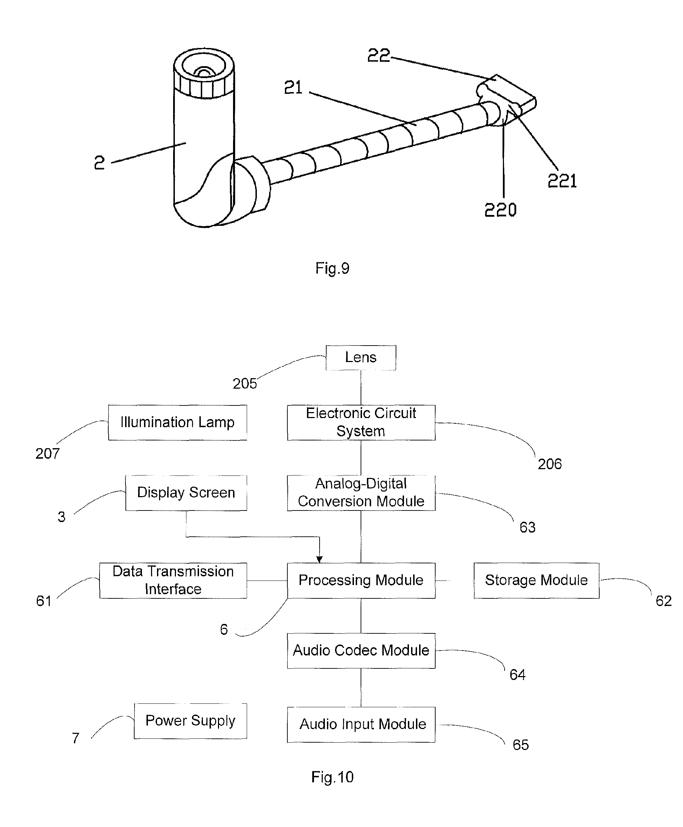

As shown in Figs. 6 to 8, the specific structure of the camera 2 will be described in details. The camera 2 comprises an housing 201, a positioning section 202 fixed inside the housing 201, an axis section 203 fitting the positioning section 202, a focusing section 204 on the top of the housing 201, an electronic circuit system 206 provided inside the camera 2, a lens 205 connected to the electronic circuit system 206, and several illumination lamps 207. Wherein, the positioning section 202 comprises a first positioning section 2020 and a second positioning section 2021 fitted with each other, and the illumination lamps may be LED lamps, visible light lamps or infrared lamps. The main body 1 is provided with an on-off key 13 for controlling the illumination lamps 207 to be turned on or off. Of course, the on-off key 13 may be provided at any position of the main body 1, and the user may turn on the illumination lamps 207 upon demand in places where the light is insufficient. The optical image of an object generated through the lens 205 is transmitted to the electronic circuit system 206, then after being processed by the electronic circuit system 206, transmitted to the processing module 6, and after being processed by the processing module 6, displayed on the display screen 3. After the first positioning section 2020 and the second positioning section 2021 are fitted with each other, a substantially semispherical space is formed between them. In correspondence with the space, the axis section 203 is formed in a hollow semispherical shape to fit with the first positioning section 2020 and the second positioning section 2021. The cable connecting the camera with the processing module passes the hollow portion of the axis section. The first positioning section 2020 and the second positioning section 2021 are fixed as a whole by the housing 201, and can be rotated from the horizontal state to the vertical state around the axis section 203 (see Figs. 8 and 9), i.e., the axis section has a rotation range of 0 to 90 degrees.

As shown in Fig. 10, which is a structure block diagram of an internal circuit of the portable observer of the present invention, the inside of the portable observer comprises the illumination lamps 207, a power supply 7, the processing module 6, the display screen 3 connected to the processing module 6, an Analog-Digital Conversion (ADC) module 63, the electronic circuit system 206 connected to the ADC module 63, the lens 205 connected to the electronic circuit system 206, a storage module 62, a data transmission interface 61, an audio codec module 64 and an audio input module 65, wherein the storage module 62, the data transmission interface 61 and the audio codec module 64 are connected to the processing module 6, respectively.

The electronic circuit system 206 comprises a photosensitive chip such as CMOS and CCD. The optical image of a scene generated through the lens 205 is projected to the photosensitive chip and is converted into an electric signal by the photosensitive chip; then the electric signal is converted into a digital image signal by the ADC module 63; then the digital image signal is transmitted to the processing module 6 for processing, and after being processed, the digital image signal is observed in real time on the display screen, or is stored in the storage module 62 and transmitted to a computer or television for a display through the data transmission interface 61, such as USB interface, HDMI interface, etc.

External sound is electrified through the audio input module 65 such as microphone, and converted from an analog signal into a digital signal, then coded by the audio codec module 64 and transmitted to the processing module 6, so as to be processed into a signal suitable to be stored. The processing module 6 transmits the processed signal to the storage module 62 for storage. In this way, the user can record sound at any time through the portable observer of the present invention.

When using the portable observer 100 of the present invention, the user can pull the camera 2 out of the inside of the main body 1 upon demand, so as to extend the whole length of the camera 2. In addition, since the connection pipe 21 of the camera 2 is a flexible plica pipe, the user can extend the camera into the slit, especially a bent slit, and the direction of the camera 2 can be adjusted by bending the connection pipe 21, so as to expand the visual field. In addition, the camera 2 can be rotated from the horizontal state to the vertical state, and the usage is flexible and convenient. Further, after the camera is rotated from the horizontal state to the vertical state, object is visible even at night through the infrared lamps 10 at both sides of the camera. In places where the light is insufficient, e.g., a slit, the human eyes cannot observe the conditions in the slit, the target area can be illuminated by turning on the illumination lamps 207 on the camera, and the conditions of the target area can be easily observed through the display screen, which is in particular convenient and reliable during searching an object.

The above are just descriptions of embodiments of the present invention, rather than limitations to the present invention. Any change or modification made according to the spirit of the present invention shall be covered by the protection scope defined by the claims of the present invention.

## Claims

1. A portable observer, comprising: a main body, a processing module provided inside the main body, a display screen and a camera provided on the main body, the display screen and the camera are connected with the processing module, image information obtained by the camera is displayed by the display screen after the image information being processed by the processing module, the portable observer is **characterized in that**: the portable observer further comprises a connection pipe connecting the camera with the main body.

2. The portable observer according to claim 1, wherein further comprising a slide section provided at one end of the connection pipe, the slide section fitting a slide rail provided inside the main body and being slidable on the slide rail to make the connection pipe extend from or retract to the inside of the main body.

3. The portable observer according to claim 2, wherein the slide rail and the main body are set separately.

4. The portable observer according to claim 3, wherein the inside of the main body is provided with at least one pair of first longitudinal walls and at least one pair of second longitudinal walls located between the first longitudinal walls, the slide rail is fixed to the first longitudinal walls, and the slide section is between the slide rail and the second longitudinal walls.

5. The portable observer according to claim 4, wherein the slide rail comprises a first horizontal section, a second horizontal section, and a vertical section connecting the first horizontal section with the second horizontal section, wherein the slide section comprises an riding section between the first horizontal section of the slide rail and the second longitudinal wall of the main body, and a fixing end for fixing the connection pipe, and wherein the upper and lower surfaces of the riding section are both set cambered and contacted with the first horizontal section of the slide rail and the second longitudinal walls of the main body, respectively.

6. The portable observer according to claim 1, wherein the display screen and the camera are provided on two opposite sides of the main body, respectively, and the connection pipe can extend from or retract to the inside of the main body along the horizontal direction by operating the camera to extend the whole length of the camera.

7. The portable observer according to claim 1, wherein an insulating strip is provided inside the main body, and a cable connecting the camera with the processing module is provided in the connection pipe, wherein the cable attaches to the insulating strip after passing the connection pipe, and then connects the processing module.

8. The portable observer according to claim 7, wherein the connection pipe is made of flexible material, and the user can change the direction of the camera by rotating or bending the connection pipe upon demand.

9. The portable observer according to claim 1, wherein the camera comprises a housing, an electronic circuit system, an illumination lamp and a lens connected to the electronic circuit system.

10. The portable observer according to claim 9, wherein the illumination lamp may be one or more and provided inside the housing.

11. The portable observer according to claim 10, wherein the main body is provided with a switch for turning on or off the illumination lamp.

12. The portable observer according to claim 1, wherein the camera comprises a housing, a positioning section fixed inside the housing and an axis section fitting the positioning section, wherein the positioning section is rotatable around the axis section.

13. The portable observer according to claim 12, wherein the positioning section has a rotation range of 0 to 90 degrees, and makes the camera to rotate from the horizontal state to the vertical state, or from the vertical state to the horizontal state.

14. The portable observer according to claim 13, wherein a cambered space is formed inside the positioning section, and the axis section protrudes outward in correspondence with the cambered space.

15. The portable observer according to claim 1, wherein the main body is provided with a receiving slot for receiving the camera, and the front side and one lateral side of the receiving slot are set open.

16. The portable observer according to claim 1, wherein the main body is provided with a pair of infrared lamps located at both sides of the camera.

17. The portable observer according to claim 1, further comprising an audio codec module connected to the processing module, an audio input module connected to the audio codec module, and a storage module connected to the processing module.

18. The portable observer according to claim 1, wherein the connection pipe is a leather hose or a plica pipe.
